# EUROPEAN PATENT SPECIFICATION

(11) **EP 3 306 899 B1**
(45) Date of publication and mention of the grant of the patent: **29.07.2020**
(21) Application number: 17195053.8
(22) Date of filing: 05.10.2017
(51) Int. Cl.: H04L 29/08, H04W 4/02, H04W 4/14

(54) **METHODS CIRCUITS DEVICES SYSTEMS AND FUNCTIONALLY ASSOCIATED COMPUTER EXECUTABLE CODE TO SUPPORT LOCATION BASED SERVICES TO A WIRELESS DEVICES COMMUNICATIVELY COUPLED TO A COMMUNICATION NETWORK**
VERFAHREN, SCHALTUNGEN, VORRICHTUNGEN, SYSTEME UND FUNKTIONAL ASSOZIIERTER COMPUTERAUSFÜHRBARER CODE ZUR UNTERSTÜTZUNG VON STANDORTBASIERTEN DIENSTEN AN DRAHTLOSVORRICHTUNGEN, DIE KOMMUNIKATIV AN EIN KOMMUNIKATIONSNETZWERK GEKOPPELT SIND
PROCÉDÉS, CIRCUITS, DISPOSITIFS ET SYSTÈMES ET CODE EXÉCUTABLE PAR ORDINATEUR FONCTIONNELLEMENT ASSOCIÉS POUR SUPPORTER DES SERVICES BASÉS SUR LA LOCALISATION À DES DISPOSITIFS SANS FIL COUPLÉS DE MANIÈRE COMMUNICATIVE À UN RÉSEAU DE COMMUNICATION

(30) Priority: 05.10.2016 US 201662404228 P
(43) Date of publication of application: 11.04.2018
(73) Proprietor: Saguna Networks Ltd., 20692 Yokneam Illit (IL)
(72) Inventor: Frydman, Daniel Nathan, 3244756 Haifa (IL); Fite, Lior, 2010400 Zurit (IL)
(74) Representative: Dr. Graf & Partner AG

(56) References cited:
- WO-A1-2014/130914
- "3rd Generation Partnership Project; Technical Specification Group Services and System Aspects; Functional stage 2 description of Location Services (LCS) (Release 8)", 3GPP STANDARD ; TECHNICAL SPECIFICATION ; 3GPP TS 23.271, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V8.1.0, 10 December 2009 (2009-12-10), pages 1-144, XP051291637, [retrieved on 2009-12-10]
- "3rd Generation Partnership Project; Technical Specification Group Services and System Aspects; Support of Short Message Service (SMS) over generic 3GPP Internet Protocol (IP) access; Stage 2 (Release 13)", 3GPP STANDARD; 3GPP TS 23.204, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V13.1.0, 22 June 2016 (2016-06-22), pages 1-59, XP051123645, [retrieved on 2016-06-22]

## Description

### FIELD OF THE INVENTION

The present invention generally relates to the field of wireless communication. More specifically, the present invention relates to methods, circuits, devices, systems and functionally associated computer executable code to support location based push notifications to wireless communication devices communicatively coupled to a wireless communication network.

### BACKGROUND

Since 2009, when for the first time the volume of data traffic over mobile network exceeded that of voice traffic, mobile data has more or less tripled each year in volume, thus taking over more and more of the mobile traffic in volume. In order to meet demand for low latency data services, Edge computing and Edge computing clouds are becoming part of the mobile network architecture.

Mobile communication network Edge computing enables a variety of services, including location based services. Additionally, as new ways of determining or estimating, with good precision, a location of each wireless communication device communicatively coupled to the network becomes possible, new opportunities to provide a wide variety of business oriented location based services are emerging.

Edge Computing solutions, be it Mobile Edge Computing (MEC), Open Edge Computing (OEC), Fog, CORD and Open CORD or any other concept of Software Defined Networking and Virtualization Technology at the edge, present an opportunity to provide new and exciting location based services to end users. The edge solution itself may be able to generate information regarding the location of each specific device on an APN UE IP address level, based on geo location coordinates, Mobile Network Tracking Area, Cell Global Identifier or any other form of location. In addition, such an edge solution may provide relevant location based services, through push notification or other method, to end users, based on their IP addresses, by running dedicated applications, but this will require corresponding installed applications to run on the end device(s). The application much actually receive this data sent through an IP gateway of the system to the device using an impermanent address. Running such locations based services on the Internet will also require a dedicated application to run on the device, enabling the Internet application to detect the specific end device.

Document WO2014/130914A1 discloses methods including receiving at a server, over the internet, an indication of a location of a mobile-client system of a user, determining an intent of the user based on the location of the user, generating one or more suggested queries based on the determined intent of the user; and transmitting a notification to the mobile-client system of the user that includes one or more of the suggested queries.

Document "3rd Generation Partnership Project; Technical Specification Group Services and System Aspects; Functional stage 2 description of Location Services (LCS) (Release 8)", 3GPP STANDARD; TECHNICAL SPECIFICATION ; 3GPP TS 23.271, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V8.1.0, 10 December 2009 (2009-12-10), pages 1-144, XP051291637, [retrieved on 2009-12-10] specifies the stage 2 of the LoCation Services (LCS) feature in UMTS and GSM, which provides the mechanisms to support mobile location services for operators, subscribers and third party service providers.

Document "3rd Generation Partnership Project; Technical Specification Group Services and System Aspects; Support of Short Message Service (SMS) over generic 3GPP Internet Protocol (IP) access; Stage 2 (Release 13)", 3GPP STANDARD; 3GPP TS 23.204, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX ; FRANCE, vol. SA WG2, no. V13.1.0, 22 June 2016 (2016-06-22), pages 1-59, XP051123645, [retrieved on 2016-06-22] specifies the stage 2 of the LoCation Services (LCS) feature in UMTS, GSM and EPS (for E-UTRAN), which provides the mechanisms to support mobile location services for operators, subscribers and third party service providers.

Accordingly, there is a need for improved methods and systems to enable providing location based services, through the use of push notifications like SMS or other similar method, to end devices with the use of dedicated application running on the devices.

### SUMMARY OF INVENTION

The present invention is achieved by the subject-matter of the independent claim 1. Advantageous embodiments are defined in the dependent claims. Further examples are provided for facilitating the understanding of the invention. Such examples include methods, circuits, devices, systems and functionally associated computer executable code to support location based services for wireless communication devices communicatively coupled to a communication network, such as a cellular communication network.

Aspects of such examples address a need to support sending relevant information to UE's in relation to their physical location with or without the installation of a dedicated application on the device. UE IP level location information, weather based on a geo location coordinates level, Mobile Network Tracking Area, Cell Global Identifier level or any other form of location information, may be obtained at a communication network edge and passed towards a dedicated network element residing at or near the network core. This core element, may be aware of fixed UE identifiers such as specific MSISDN, IMSI, ACR and/or any other UE identification information of UE's on the network, and may provide mapping information to correlate received UE IP addresses based on APN (Access Point Name). Correlation between impermanent IP address and permanent identifiers may than enable the sending of messages, such as location based service information, in the form of push messages or notification over the network (such as SMS) towards UE's whose IP addresses were identified by a location based service as the Edge of the network. The present invention includes systems and method to providing location based services using a push notification to end devices independent on the devices having a dedicated application associated with the location based running on the device.

According to embodiments of the such examples, Edge computing elements, platforms or other solutions deep in the RAN portion of a mobile network, at or near a network Edge segment or access segment, may generate location information per each device being served by the edge computing solution. The specific type of information can vary according to the solution and may include geo location coordinates, Mobile Network Tracking Area, Cell Global Identifier or any other form of location information. This information may be used to generate specific location based services to end devices. As the edge solutions are located in the RAN portion of the network, they usually only have access to IP addresses on an APN level of the devices. IP addresses on an APN level may be available for the detection of each device while specific device identification information of the device (such as MSISDN, IMSI or other) isn't available in this portion of the network. In order to provide dedicated services, including location based services, to a device from information the edge platform residing in the RAN provides, without a dedicated application running on the device, an application residing on the Internet must be aware of the device's permanent identification information - just the device APN level IP address will not help.

Accordingly, aspects such examples may include a network element located outside the RAN or network edge, also referred to as a central module, in an area of the network at or near the network core, which may communicate with services running on the edge of the network and may have access to UE identifier information. This module may also track identification information of each user UE and the APN level IP address allocated to it, by sniffing the relevant control interfaces in the mobile network, or by any other method known today or to be devised in the future. This network element or module may be referred as an UE network address resolving element which is configured to correlate a permanent device identifier of each of one or more UE's, communicatively coupled to a wireless communication node of the network, to the UE's respective current but impermanent APN UE IP level address. The address resolving element may generate and manage a mapping between the UE identifier information and respective device APN level IP addresses.

According to embodiments, edge location based service may communicate towards the central module location information and IP address of a specific device identifier within the service's respective coverage are, optionally with additional data or messages content to be provided to a specific device. The central module may identify the specific device and generate a standard message (for example SMS) towards the device including the information received from the edge device, wherein stand message or push message may be forward to device through a network push messaging gateway, such as for example an SMS gateway or a network notification gateway.

### BRIEF DESCRIPTION OF THE FIGURES

The embodiments however, both as to organization and method of operation, together with objects, features, and advantages thereof, may best be understood by reference to the following detailed description when read with the accompanying drawings in which:
Fig. 1A is a block level network diagram illustrating an exemplary communication network according to embodiments of the present invention including edge computational platforms at the network edge segments and an UE address resolver at or near the core of the network;
Fig. 1B is a data flow level diagram illustrating exemplary data flow between elements at the edge, at the cored and outside the network in accordance with embodiments of the present invention;
Fig. 2 is a functional block diagram of an impermanent UE network address to permanent UE identifier resolver element or module (AKA central module) in accordance with embodiments of the present invention;
Fig. 3A is an information flow diagram showing how a location based service may be provide to a UE communicatively coupled to edge segment of wireless communication network, wherein providing the service includes an ongoing generation of an internal table/DB which matches or correlates between each UE's MSISDN/IMSI/other and the UE's networked assigned APN IP address, in accordance with embodiments of the present invention; and
Fig. 3B is an information diagram illustrating a process of generating specific location based content for a specific UE device at the edge of the network and providing the custom content to the device over the mobile network irrespective of a dedicated application running on the device.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE FIGURES

In the following detailed description, numerous specific details are set forth in order to provide a thorough understanding of the invention. In other instances, well-known methods, procedures, components and circuits have not been described in detail.

Unless specifically stated otherwise, as apparent from the following discussions, it is appreciated that throughout the specification discussions utilizing terms such as "processing", "computing", "calculating", "determining", or the like, may refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

In addition, throughout the specification discussions utilizing terms such as "storing", "hosting", "caching", "saving", or the like, may refer to the action and/or processes of 'writing' and 'keeping' digital information on a computer or computing system, or similar electronic computing device, and may be interchangeably used. The term "plurality" may be used throughout the specification to describe two or more components, devices, elements, parameters and the like.

Some embodiments, for example, may take the form of an entirely hardware embodiment, an entirely software embodiment, or an embodiment including both hardware and software elements. Some embodiments may be implemented in software, which includes but is not limited to firmware, resident software, microcode, or the like.

Furthermore, some embodiments may take the form of a computer program product accessible from a computer-usable or computer-readable medium providing program code for use by or in connection with a computer or any instruction execution system. For example, a computer-usable or computer-readable medium may be or may include any apparatus that can contain, store, communicate, propagate, or transport the program for use by or in connection with the instruction execution system, apparatus, or device.

In some embodiments, the medium may be an electronic, magnetic, optical, electromagnetic, infrared, or semiconductor system (or apparatus or device) or a propagation medium. Some demonstrative examples of a computer-readable medium may include a semiconductor or solid-state memory, magnetic tape, a removable computer diskette, a random access memory (RAM), a read-only memory (ROM), any composition and/or architecture of semiconductor based Non-Volatile Memory (NVM), any composition and/or architecture of biologically based Non-Volatile Memory (NVM), a rigid magnetic disk, and an optical disk. Some demonstrative examples of optical disks include compact disk - read only memory (CD-ROM), compact disk - read/write (CD-R/W), and DVD.

In some embodiments, a data processing system suitable for storing and/or executing program code may include at least one processor coupled directly or indirectly to memory elements, for example, through a system bus. The memory elements may include, for example, local memory employed during actual execution of the program code, bulk storage, and cache memories which may provide temporary storage of at least some program code in order to reduce the number of times code must be retrieved from bulk storage during execution.

In some embodiments, input/output or I/O devices (including but not limited to keyboards, displays, pointing devices, etc.) may be coupled to the system either directly or through intervening I/O controllers. In some embodiments, network adapters may be coupled to the system to enable the data processing system to become coupled to other data processing systems or remote printers or storage devices, for example, through intervening private or public networks. In some embodiments, modems, cable modems and Ethernet cards are demonstrative examples of types of network adapters. Other functionally suitable components may be used.

More specifically, the present embodiments includes methods, circuits, devices, systems and functionally associated computer executable code to support edge computing on a communication network, such as a wireless access communication network. According to embodiments, push type messages to a UE may include location service related content. UE localization may be performed by server applications having access to only application the UE's temporary APN IP address, while network push type messages may be addressed by a permanent device identifier of the UE. A process of UE address correlation at or near the network core may support location triggered push messaging to the UE.

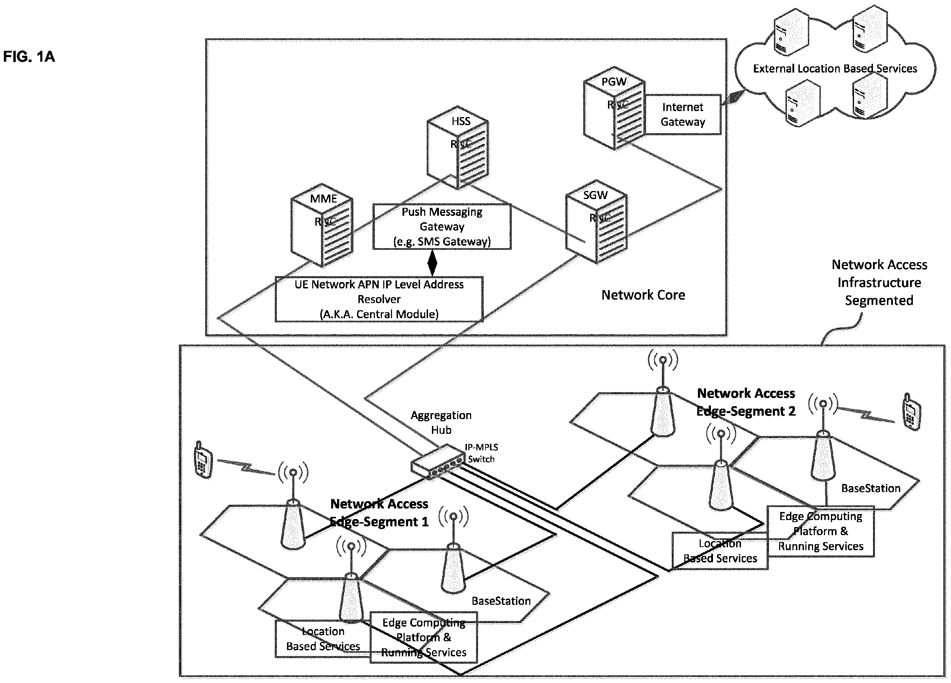

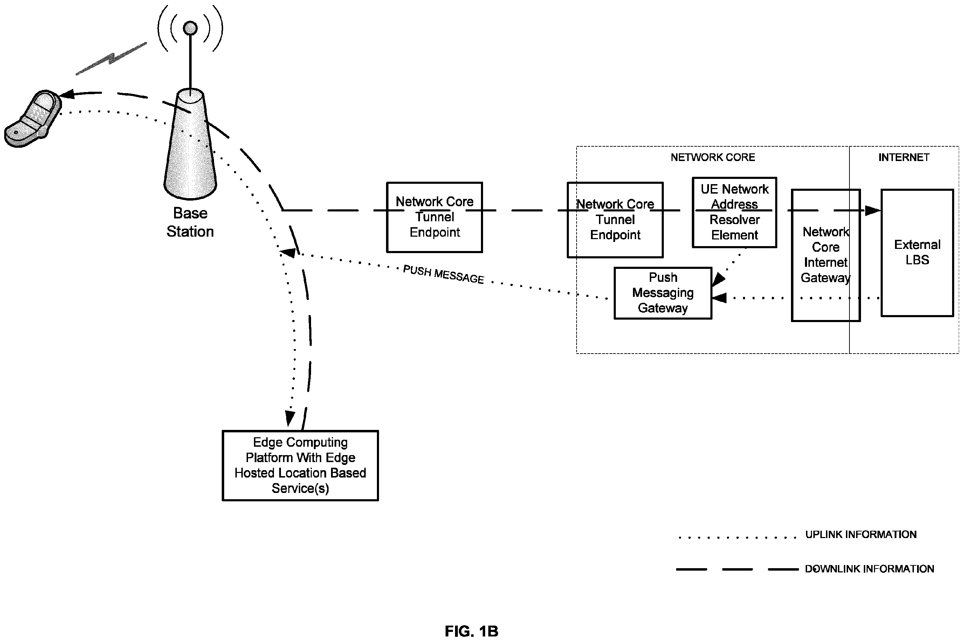

Turning now to Fig. 1A, there is shown a block level network diagram illustrating an exemplary communication network according to embodiments of the present invention including edge computational platforms at the network edge segments and an UE address resolver at or near the core of the network. Also shown are location based service applications or services running both at the network edges and outside the network. Push messaging gateway sends messages to specific UE's communicatively coupled to nodes or access points of the network edge segments with the aid of an address resolver which translates temporary APN IP addresses into device identifiers usable for push messaging or notifications. Fig. 1B is a data flow level diagram illustrating exemplary data flow between elements at the edge, at the cored and outside the network in accordance with embodiments of the present invention for generating a push message to the UE shown.

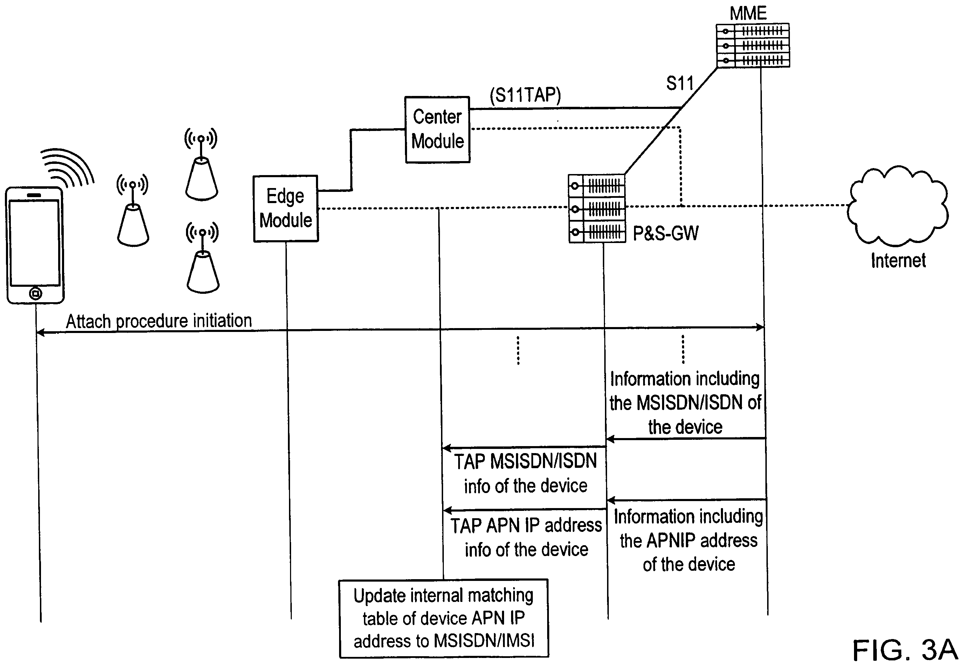

Turning now to Fig. 3A, there is shown an information flow diagram illustrating a process of ongoing generation of an internal table/DB correlating or matching between each UE's MSISDN/IMSI/other identifier and the impermanent APN IP address assigned the device. This takes place for each device that is being communicatively coupled or attached to a network according to the present invention and supported by the suggested solution. Upon disconnecting a specific UE from the network, the specific entry associated with the specific UE may be removed.

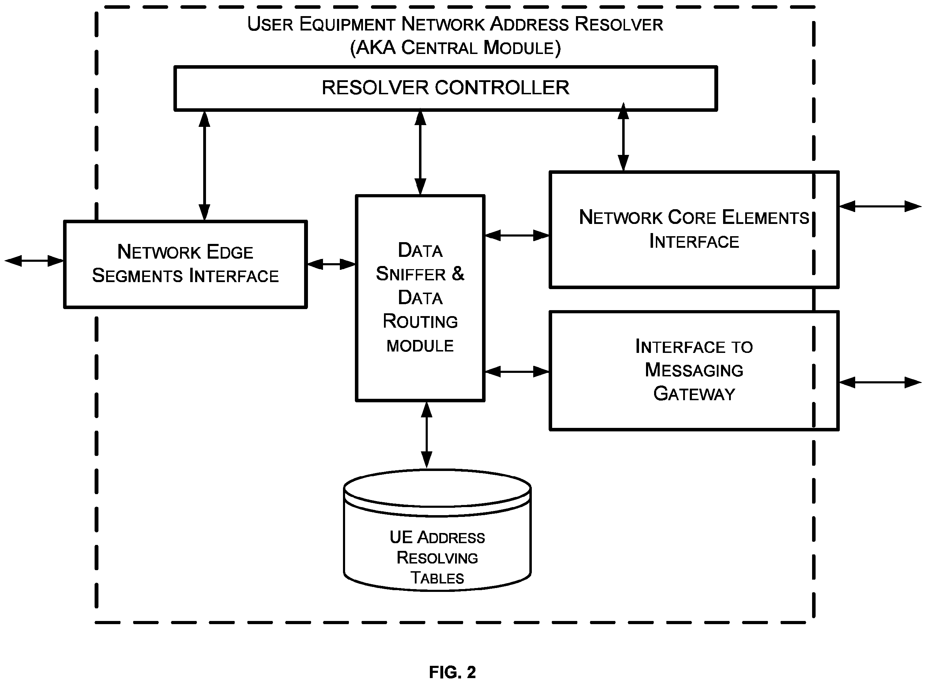

Fig. 2 is a functional block diagram of an impermanent UE network address to permanent UE identifier resolver element or module (AKA central module) in accordance with embodiments of the present invention. The resolved is the network element which generates the DB/table of correlations. It is also the entity which provides the correlation information as need for specific push messaging.

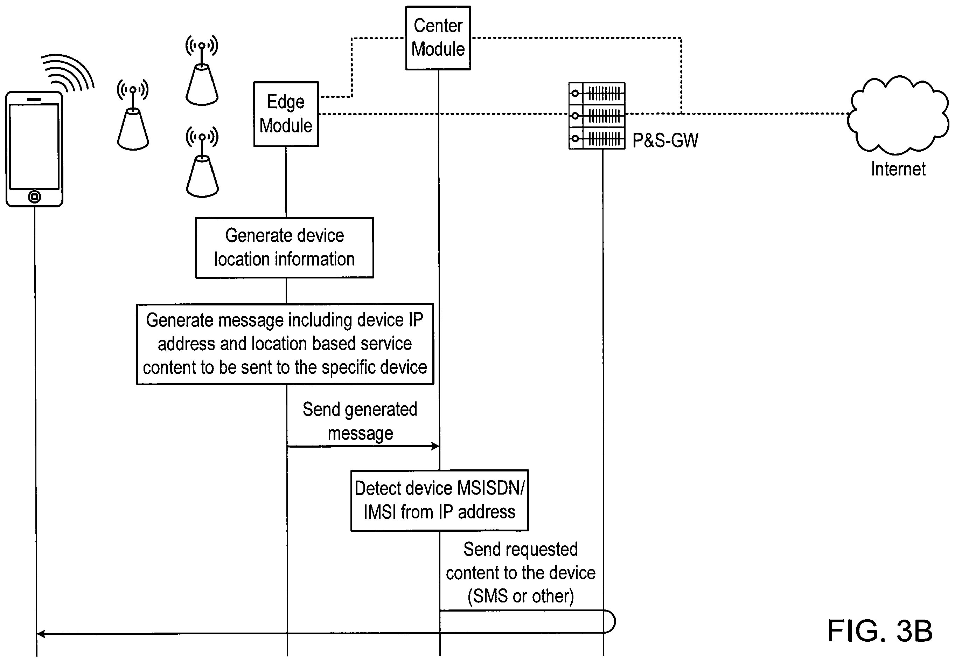

Turning now to Fig. 3B, there is shown a data follow illustration describing the process of generating specific location based content for a specific device at the edge and providing it to the device over the mobile network nondependent on a dedicated application running on the device.

As shown in Fig. 1A, a communication network according to embodiments of the present invention may include at least one network core with one or more network elements to perform each of one or more network management functions and at least one network edge segment with: (a) one or more wireless access nodes, (b) at least one edge computing resource running at least one location based service, and (c) a device localization service configured to: (i) estimate a location of a wireless communicatively device (UE) coupled to one of said one or more wireless access nodes, (ii) detect an APN UE IP level address for the UE, and (iii) convey the location estimate and detected address of the UE to the at least one location based service. The location based service is configured to, responsive to receiving the location estimate and detected address of the UE, generate message content for the UE and to use the generated content, along with the UE's APN UE IP level address, to trigger a push messaging gateway located outside said network access segment to push a message to the UE.

The push messaging gateway may be adapted to send a push message to an UE designated within a push message instruction received at said gateway, which push message includes message content included within the received push message instruction, and wherein a push message to a given UE requires a permanent device identifier of the UE. Accordingly, the network may include a UE network address resolving element configured to correlate a permanent device identifier of each of one or more UE's, communicatively coupled to a wireless communication node of said network, to the UE's respective impermanent APN UE IP level address.

The edge location based service may send a localized UE's APN UE IP level address to said UE network address resolving element and may receive the permanent device identifier for the UE. The permanent device identifier is selected from the group consisting of: (a) MSISDN, (b) IMSI, (c) ACR, and/or any other device identification information which is assigned and programmed into non-volatile memory of the device. The at least one edge location based service may compare said permanent device identifier with a set of stored service recipient profiles indexed by permanent device identifier, and in the event a match is found the edge location based service generates may a custom message based on the matched profile.

According to embodiments, at least one edge location based service uses an UE's impermanent APN UE IP level address to address and send to said push messaging gateway, directly or through another network element, a message push instruction including message content for the UE associated with the impermanent APN UE IP level address. Upon receiving the message push instruction, said push messaging gateway may convert the impermanent APN UE IP level address within the message into a permanent device identifier for the UE designed in the message, and then uses the permanent device identifier to generate and send a network push message to the designated UE with the content in the message push instruction. The push messaging gateway may convert the impermanent APN UE IP level address within the message into a permanent device identifier for the UE designed in the message by accessing said UE network address resolving element or its database/table. UE network address resolving element may be integral or otherwise functionally associated with said gateway.

According to embodiments, the at least one edge location based service may send the generated message content along with the UE's impermeant APN UE IP level address as a message push instruction to said gateway via said UE network address resolving element. The UE network address resolving element may be part of a network appliance, such as a central module, residing outside said network access segment. Upon receiving a push message instruction from said location based service may augment the push message instruction before forwarding part or all of the augmented instruction to said push messaging gateway. Augmentation may include said UE network address resolving element providing a permanent device identifier for the UE corresponding to the impermanent APN UE IP addresses included within the message push instruction received from said at least one location based service.

The network address resolving element may operate by sniffing signaling between communicatively coupled UE's and network management elements on said network in order to generate a mapping table which, for each of one or more UE's communicatively coupled to said network, correlates between a permanent identifier of the UE communicatively coupled to said network and an impermanent APN UE IP address assigned to the UE during by said network. The permanent device identifier may be selected from the group consisting of: (a) MSISDN, (b) IMSI, (c) ACR, and/or any other device identification information which is assigned and programmed into non-volatile memory of the device.

The messaging gateway according to embodiments may be selected from the group consisting of: (a) sms gateway, (b) network push notification gateway, and or (c) operating system notification gateway. The gateway may include unidirectional or bidirectional communication with the resolver element, with the location based service or both.

In a preferred method of providing a location based service to a wireless communication device (UE) communicatively coupled to an access node of an edge segment of communication network, said method comprising:
estimating a location of UE with a coverage area of the network edge segment, detect an APN UE IP level address for the UE, and conveying the location estimate and detected address of the UE to the at least one location based service; and
response to the conveyed information generating message content for the UE and using the UE's APN UE IP level address to trigger a push messaging gateway located outside said network access segment to push a message to the UE. A further preferred method step comprising further sending a push message to an UE designated within a push message instruction include obtaining a permanent device identifier of the UE. A further preferred method step comprising further correlating a permanent device identifier of each of one or more UE's, communicatively coupled to a wireless communication node of the network, to the UE's respective impermanent APN UE IP level address.

Functions, operations, components and/or features described herein with reference to one or more embodiments, may be combined or otherwise utilized with one or more other functions, operations, components and/or features described herein with reference to one or more other embodiments, or vice versa.

## Claims

1. A communication network comprising:
at least one network core with one or more network elements to perform each of one or
more network management functions;
at least one network edge segment including:
a) one or more wireless access nodes,
b) at least one edge computing resource running at least one location based service, and
c) a device localization service configured to:
i) estimate a location of a wireless communicatively device UE, coupled to one of said one or more wireless access nodes,
ii) detect a temporary APN UE IP level address for the UE, and
iii) convey the location estimate and detected temporary address of the UE to the at least one location based service;
**characterized in that**
said location based service is configured to, responsive to receiving the location estimate and detected temporary address of the UE, generate location specific message content for the UE and send the generated location specific message content together with the detected temporary address to a network address resolving element as a push message instruction; and
said network address resolving element comprising:
a database of tables correlating temporary APN UE IP level addresses to permanent UE identifiers;
a sniffing module for sniffing signaling between said network edge segment and said network core to generate and update said database of tables correlating temporary APN UE IP level addresses to permanent UE identifiers; and
a push messaging gateway interface configured to push the generated location specific message content to the UE using a permanent UE identifier retrieved from said database.

2. The communication network according to claim 1, wherein said push messaging gateway is adapted to send a push message to an UE designated within a push message instruction received at said gateway, which push message includes message content included within the received push message instruction, and wherein a push message to a given UE requires a permanent device identifier of the UE.

3. The communication network according to claim 2, wherein said permanent device identifier is selected from the group consisting of: a) MSISDN, b) IMSI, c) ACR, and/or any other device identification information which is assigned and programmed into non-volatile memory of the device.

4. The communication network according to claim 2, wherein said at least one edge location based service compares said permanent device identifier with a set of stored service recipient profiles indexed by permanent device identifier, and in the event a match is found the edge location based service generates a custom message based on the matched profile.

5. The communication network according to claim 1, wherein upon receiving the message push instruction, said push messaging gateway converts the impermanent APN UE IP level address within the message into a permanent device identifier for the UE designed in the message, and then uses the permanent device identifier to generate and send a network push message to the designated UE with the content in the message push instruction.

6. The communication network according to claim 1, wherein said at least one edge location based service sends the generated message content along with the UE's impermeant APN UE IP level address as a message push instruction to said gateway via said UE network address resolving element.

7. The communication network according to claim 6, wherein said UE network address resolving element is part of a network appliance residing outside said network access segment and upon receiving a push message instruction from said location based service augments the push message instruction before forwarding part or all of the augmented instruction to said push messaging gateway.

8. The communication network according to claim 7, wherein augmentation includes said UE network address resolving element providing a permanent device identifier for the UE corresponding to the impermanent APN UE IP addresses included within the message push instruction received from said at least one location based service.

9. The communication network according to claim 2, wherein said permanent device identifier is selected from the group consisting of: a) MSISDN, b) IMSI, c) ACR, and/or any other device identification information which is assigned and programmed into non-volatile memory of the device, and/or wherein said push messaging gateway is selected from the group consisting of: a) sms gateway, b) network push notification gateway, and or c) operating system notification gateway.

## Patentansprüche

1. Kommunikationsnetzwerk, umfassend:
mindestens einen Netzwerkkern mit einem oder mehreren Netzwerkelementen, um jede einer oder mehrerer Netzwerkverwaltungsfunktionen auszuführen,
mindestens ein Netzwerk-Randsegment, das Folgendes beinhaltet:
a) einen oder mehrere drahtlose Zugangsknoten,
b) mindestens eine Rand-Datenverarbeitungsressource, die mindestens einen standortbasierten Dienst ausführt, und
c) einen Einrichtungslokalisierungsdienst, der konfiguriert ist, um:
i) einen Standort einer drahtlosen Kommunikationseinrichtung, UE, zu schätzen, die mit einem des einen oder der mehreren drahtlosen Zugangsknoten gekoppelt ist,
ii) eine temporäre APN-UE-IP-Level-Adresse für das UE zu erfassen und
iii) die Standortschätzung und die erfasste temporäre Adresse des UEs an den mindestens einen standortbasierten Dienst zu übermitteln,
**dadurch gekennzeichnet, dass**
der standortbasierte Dienst dafür konfiguriert ist, in Reaktion auf das Empfangen der Standortschätzung und der erfassten temporären Adresse des UEs standortspezifischen Nachrichteninhalt für das UE zu erzeugen und den erzeugten standortspezifischen Nachrichteninhalt zusammen mit der erfassten temporären Adresse als Push-Nachrichtenanweisung an ein Netzwerkadressen-Auflösungselement zu senden, und
das Netzwerkadressen-Auflösungselement Folgendes umfasst:
eine Datenbank mit Tabellen, die temporäre APN-UE-IP-Level-Adressen mit permanenten UE-Kennungen korrelieren,
ein Aufspürmodul zum Aufspüren von Signalisierung zwischen dem Netzwerk-Randsegment und dem Netzwerkkern, um die temporäre APN-UE-IP-Level-Adressen mit permanenten UE-Kennungen korrelierenden Tabellen zu erzeugen und zu aktualisieren, und
eine Push-Nachrichtenübertragungs-Gateway-Schnittstelle, die dafür konfiguriert ist, den erzeugten standortspezifischen Nachrichteninhalt unter Verwendung einer aus der Datenbank abgerufenen permanenten UE-Kennung an das UE zu pushen.

2. Kommunikationsnetzwerk nach Anspruch 1, wobei das Push-Nachrichtenübertragungs-Gateway dafür eingerichtet ist, eine Push-Nachricht an ein in einer an dem Gateway empfangenen Push-Nachrichtenanweisung benanntes UE zu senden, wobei die Push-Nachricht in der empfangenen Push-Nachrichtenanweisung enthaltenen Nachrichteninhalt beinhaltet und wobei eine Push-Nachricht an ein bestimmtes UE eine permanente Einrichtungskennung des UEs erfordert.

3. Kommunikationsnetzwerk nach Anspruch 2, wobei die permanente Einrichtungskennung ausgewählt ist aus der Gruppe, bestehend aus: a) MSISDN, b) IMSI, c) ACR und/oder jeglichen anderen Einrichtungsidentifikationsinformationen, die einem nichtflüchtigen Speicher der Einrichtung zugewiesen und in diesen programmiert sind.

4. Kommunikationsnetzwerk nach Anspruch 2, wobei der mindestens eine randstandortbasierte Dienst die permanente Einrichtungskennung mit einem Satz gespeicherter, durch die permanente Einrichtungskennung indexierter Dienstempfängerprofile vergleicht, und falls eine Übereinstimmung gefunden wird, der randstandortbasierte Dienst auf Grundlage des übereinstimmenden Profils eine nutzerspezifische Nachricht erzeugt.

5. Kommunikationsnetzwerk nach Anspruch 1, wobei nach Empfangen der Nachrichten-Push-Anweisung das Push-Nachrichtenübertragungs-Gateway die nichtpermanente APN-UE-IP-Level-Adresse in der Nachricht in eine permanente Einrichtungskennung für das in der Nachricht benannte UE umwandelt und anschließend die permanente Einrichtungskennung verwendet, um eine Netzwerk-Push-Nachricht mit dem Inhalt in der Nachrichten-Push-Anweisung zu erzeugen und an das benannte UE zu senden.

6. Kommunikationsnetzwerk nach Anspruch 1, wobei der mindestens eine randstandortbasierte Dienst den erzeugten Nachrichteninhalt zusammen mit der nichtpermanenten APN-UE-IP-Level-Adresse des UEs als Nachrichten-Push-Anweisung über das UE-Netzwerkadressen-Auflösungselement an das Gateway sendet.

7. Kommunikationsnetzwerk nach Anspruch 6, wobei das UE-Netzwerkadressen-Auflösungselement Teil einer Netzwerkvorrichtung ist, die sich außerhalb des Netzwerkzugangssegments befindet, und nach Empfangen einer Push-Nachrichtenanweisung von dem standortbasierten Dienst die Push-Nachrichtenanweisung erweitert, bevor die erweiterte Anweisung teilweise oder ganz an das Push-Nachrichtenübertragungs-Gateway weitergeleitet wird.

8. Kommunikationsnetzwerk nach Anspruch 7, wobei die Erweiterung beinhaltet, dass das UE-Netzwerkadressen-Auflösungselement eine permanente Einrichtungskennung für das UE bereitstellt, die den nichtpermanenten APN-UE-IP-Adressen entspricht, die in der von dem mindestens einen standortbasierten Dienst empfangenen Nachrichten-Push-Anweisung enthalten sind.

9. Kommunikationsnetzwerk nach Anspruch 2, wobei die permanente Einrichtungskennung ausgewählt ist aus der Gruppe, bestehend aus: a) MSISDN, b) IMSI, c) ACR und/oder jeglichen anderen Einrichtungsidentifikationsinformationen, die einem nichtflüchtigen Speicher der Einrichtung zugewiesen und in diesen programmiert sind, und/oder wobei das Push-Nachrichtenübermittlungs-Gateway ausgewählt ist aus der Gruppe, bestehend aus: s) SMS-Gateway, b) Netzwerk-Push-Benachrichtigungs-Gateway und/oder c) Betriebssystem-Benachrichtigungs-Gateway.

## Revendications

1. Réseau de communication, comprenant :
au moins un cœur de réseau avec un ou plusieurs éléments de réseau pour réaliser chacune d'une ou de plusieurs fonctions de gestion de réseau ;
au moins un segment de périphérie de réseau incluant :
a) un ou plusieurs noyaux de réseau sans fil,
b) au moins une ressource informatique de périphérie exécutant au moins un service à base d'emplacement, et
c) un service de localisation de dispositif configuré pour :
i) estimer un emplacement d'un dispositif de communication sans fil UE, couplé à un desdits un ou plusieurs noyaux de réseau sans fil,
ii) détecter une adresse temporaire de niveau IP d'UE à APN pour l'UE, et
iii) transmettre l'estimation d'emplacement et l'adresse temporaire détectée de l'UE à l'au moins un service à base d'emplacement ;
**caractérisé en ce que**
ledit service à base d'emplacement est configuré pour, en réponse à la réception de l'estimation d'emplacement et de l'adresse temporaire détectée de l'UE, générer un contenu de message spécifique d'emplacement pour l'UE et envoyer le contenu de message spécifique d'emplacement généré, conjointement avec l'adresse temporaire détectée, à un élément de résolution d'adresse de réseau sous forme d'instruction de message de pousser ; et
ledit élément de résolution d'adresse de réseau comprenant :
une base de données de tables corrélant des adresses temporaires de niveau IP d'UE à APN avec des identifiants d'UE permanents ;
un module de reniflage pour renifler une signalisation entre ledit segment de périphérie de réseau et ledit cœur de réseau pour générer et mettre à jour ladite base de données de tables corrélant des adresses temporaires de niveau IP d'UE à APN avec des identifiants d'UE permanents ; et
une interface de passerelle de messagerie de pousser configurée pour pousser le contenu de message spécifique d'emplacement généré vers l'UE en utilisant un identifiant d'UE permanent récupéré de ladite base de données.

2. Réseau de communication selon la revendication 1, dans lequel ladite passerelle de messagerie de pousser est adaptée pour envoyer un message de pousser à un UE désigné à l'intérieur d'une instruction de message de pousser reçue au niveau de ladite passerelle, lequel message de pousser inclut un contenu de message inclus à l'intérieur de l'instruction de message de pousser reçue, et dans lequel un message de pousser pour un UE donné nécessite un identifiant de dispositif permanent de l'UE.

3. Réseau de communication selon la revendication 2, dans lequel ledit identifiant de dispositif permanent est sélectionné parmi le groupe constitué de : a) MSISDN, b) IMSI, c) ACR, et/ou toute autre information d'identification de dispositif qui est attribuée et programmée dans une mémoire non volatile du dispositif.

4. Réseau de communication selon la revendication 2, dans lequel ledit au moins un service à base d'emplacement de périphérie compare ledit identifiant de dispositif permanent à un ensemble de profils de récepteur de service stockés indexés par identifiant de dispositif permanent, et, au cas où une concordance est trouvée, le service à base d'emplacement de périphérie génère un message personnalisé sur la base du profil concordant.

5. Réseau de communication selon la revendication 1, dans lequel, lors de la réception l'instruction de pousser de message, ladite passerelle de messagerie de pousser convertit l'adresse non permanente de niveau IP d'UE à APN à l'intérieur du message en un identifiant de dispositif permanent pour l'UE conçu dans le message, et puis utilise l'identifiant de dispositif permanent pour générer et envoyer un message de pousser de réseau à l'UE désigné, avec le contenu, dans l'instruction de pousser de message.

6. Réseau de communication selon la revendication 1, dans lequel ledit au moins un service à base d'emplacement de périphérie envoie le contenu de message généré conjointement avec l'adresse non permanente de niveau IP d'UE à APN de l'UE sous forme d'instruction de pousser de message à ladite passerelle par l'intermédiaire dudit élément de résolution d'adresse de réseau d'UE.

7. Réseau de communication selon la revendication 6, dans lequel ledit élément de résolution d'adresse de réseau d'UE fait partie d'un appareil de réseau résidant à l'extérieur dudit segment d'accès de réseau et, lors de la réception d'une instruction de message de pousser à partir dudit service à base d'emplacement, augmente l'instruction de message de pousser avant de transférer une partie ou la totalité de l'instruction augmentée à ladite passerelle de messagerie de pousser.

8. Réseau de communication selon la revendication 7, dans lequel l'augmentation inclut, par ledit élément de résolution d'adresse de réseau d'UE, la fourniture d'un identifiant de dispositif permanent pour l'UE correspondant aux adresses non permanentes IP d'UE à APN incluses à l'intérieur de l'instruction de pousser de message reçue à partir dudit au moins un service à base d'emplacement.

9. Réseau de communication selon la revendication 2, dans lequel ledit identifiant de dispositif permanent est sélectionné parmi le groupe constitué de : a) MSISDN, b) IMSI, c) ACR, et/ou toute autre information d'identification de dispositif qui est attribuée et programmée dans une mémoire non volatile du dispositif, et/ou dans lequel ladite passerelle de messagerie de pousser est sélectionnée parmi le groupe constitué de : a) passerelle sms, b) passerelle de notification de pousser de réseau, et ou c) passerelle de notification de système d'exploitation.
